# EUROPÄISCHE PATENTSCHRIFT

(11) **EP 1 236 067 B1**
(45) Veröffentlichungstag und Bekanntmachung des Hinweises auf die Patenterteilung: **07.05.2003**
(21) Anmeldenummer: 00954364.6
(22) Anmeldetag: 21.07.2000
(51) Int. Cl.: G02B 26/02, G02B 6/42, G02B 6/38

(54) **OPTISCHE KOPPLUNGSEINRICHTUNG**
OPTICAL COUPLING DEVICE
DISPOSITIF OPTIQUE DE COUPLAGE

(30) Priorität: 21.07.1999 DE 19934179
(43) Veröffentlichungstag der Anmeldung: 04.09.2002
(73) Patentinhaber: SCC Special Communication Cables GmbH & Co. KG, 81379 München (DE)
(72) Erfinder: SCHWEIKER, Wolfgang, D-83629 Weyarn (DE); KÄMPF, Mathias, D-93142 Maxhütte-Haidhof (DE); HEISE, Gerhard, D-85579 Neubiberg (DE)
(74) Vertreter: Viering, Jentschura & Partner
(86) Internationale Anmeldenummer: DE0002398
(87) Internationale Veröffentlichungsnummer: WO01007955

(56) Entgegenhaltungen:
- WO-A-98/13718
- DE-A- 3 716 836
- DE-A- 19 635 023
- PATENT ABSTRACTS OF JAPAN vol. 013, no. 242 (P-880), 7. Juni 1989 (1989-06-07) & JP 01 044909 A (FURUKAWA ELECTRIC CO LTD:THE), 17. Februar 1989 (1989-02-17)
- PATENT ABSTRACTS OF JAPAN vol. 013, no. 131 (P-850), 31. März 1989 (1989-03-31) & JP 63 301918 A (NIPPON TELEGR & TELEPH CORP), 8. Dezember 1988 (1988-12-08)

## Beschreibung

Die Erfindung betrifft eine optische Kopplungseinrichtung zum Überkoppeln von Licht aus einem ersten Lichtwellenleiter in einen zweiten Lichtwellenleiter. Eine solche Kopplungseinrichtung ist beispielsweise aus der WO 98/13718 bekannt.

Derartige Kopplungseinrichtungen werden in optischen Filtern nach dem Phased-Array-Prinzip mit einer Einkoppelfläche eingesetzt, in die an einer bestimmten geometrischen Position Licht eintritt, wobei die geometrische Position die Ausgangswellenlänge des optischen Filters beeinflußt. Derartige optische Filter nach dem Phased-Array-Prinzip werden insbesondere als Multiplexer oder Demultiplexer im optischen Wellenlängenmultiplex-Betrieb (WDM) eingesetzt, da sie eine geringe Einfügedämpfung und eine hohe Nebensprechunterdrückung aufweisen. Der optische Filter weist als wesentlichen Bestandteil mehrere gekrümmt verlaufende optische Lichtwellenleiter unterschiedlicher Länge auf, die einen Phasenschieberbereich bilden. In der deutschen Patentanmeldung DE 44 22 651.9 wird beschrieben, daß die Mittelwellenlänge eines Phased-Array-Filters durch die Position eines Einkoppel-Lichtwellen-leiters, der das Licht in den Schichtwellenleiter leitet, festgelegt werden kann. Auf diese Weise kann durch die geometrische Positionierung des Einkoppel-Lichtwellenleiters oder der Einkoppelfaser die Mittelwellenlänge des optischen Filters genau justiert werden. Da es daher erwünscht ist, daß die Lichtwellenleiter relativ zueinander verschoben werden, können die Lichtwellenleiter nicht miteinander verklebt werden.

Bei bekannten Kopplungseinrichtungen werden die Fasern in V-Nuten geklebt und die dabei entstehenden Hohlräume mit Klebstoff gefüllt. Da der Klebstoff ein anderes Verhalten bezüglich Temperatur, Ausdehnungskoeffizient, Wasseraufnahme usw. als die Fasern und Halteklötze, beziehungsweise das längenveränderliche Element aufweist, kann es unter wechselnden Umweltbedingungen zu Spannungen im Klebstoff und damit zu einer Dejustierung der Fasern kommen.

Aus der JP 01 044909 A ist ein optischer Schalter zum gleichzeitigen Schalten mehrerer optischer Fasern bekannt, wobei eine erste und eine zweite Ferrule aneinanderstoßend vorgesehen sind, und wobei die erste Ferrule mittels einer Zugfeder und eines Solenoids relativ zur zweiten Ferrule bewegbar ist, um zwei der ersten Ferrule zugeordneter Stränge optischer Fasern mit einem der ersten Ferrule zugeordneten Strang optischer Fasern selektiv zu verbinden.

Aus der JP 63 301918 A ist ein optischer Schalter bekannt, bei dem eine erste und eine zweite optische Faser mittels Ferrulen stationär gehalten sind, und bei dem eine dritte optische Faser mittels einer Ferrule zu den beiden anderen Fasern selektiv ausrichtbar gehalten ist.

Aus der WO 98/13718 ist eine optische Kopplungsvorrichtung bekannt, mit einander gegenüber angeordneten Wellenleiter-Endflächen zum Koppeln zwischen den beiden Endflächen und mit einer Verschiebeeinrichtung zum Verschieben der beiden Endflächen relativ zueinander parallel zu einer Endfläche, die ein Ausdehnungselement aufweist, das die Endflächen aufgrund einer räumlichen Ausdehung und/oder Kontraktion des Elements relativ zueinander bewegt. Nach einer Ausführungsform ist ferner eine Führungseinrichtung vorgesehen, mit zwei einander gegenüberliegenden und relativ zu einer festen Endfläche fest angeordneten Gleitflächen, zwischen denen ein Halterungskörper angeordnet und längs welchen der Halterungskörper parallel zur festen Endfläche verschiebbar ist. Eine Gleitfläche ist beispielsweise die Oberfläche einer Basisplatte, und die andere Gleitfläche ist beispielsweise eine Oberfläche einer Deckplatte, die durch Stützen im Abstand von der Basisplatte gehalten ist.

Aus der DE 196 35 023 A1 ist ein LWL-Schalter bekannt, wobei mindestens zwei erste Lichtwellenleiter in der Stirnfläche je einer ersten Ferrule enden und alle ersten Ferrulen parallel zueinander in einer gemeinsamen Ebene angeordnet sind, wobei ein zweiter Lichtwellenleiter in der Stirnfläche einer zweiten Ferrule endet und die Stirnfläche der zweiten Ferrule in der gleichen Ebene wie die Stirnflächen der ersten Ferrulen liegt, und wobei die zweite Ferrule zur optischen Kopplung mit einer beliebigen ersten Ferrule relativ zu den ersten Ferrulen rechtwinklig zu deren Achsen verschiebbar ist und in der jeweiligen Koppelstellung mit der betreffenden ersten Ferrule fluchtet.

Aufgabe der Erfindung ist die Schaffung einer optischen Kopplungseinrichtung, bei der die Verbindung zwischen zwei lichtleitenden Strukturen, insbesondere die Verbindung zwischen einem Lichtwellenleiter (LWL-Faser/ LWL-Bändchen) und einem Streifenleiter eines optischen Bauelementes (Chip) mit einer hohen Sicherheit und Stabilität bei kostengünstiger Montage erreicht wird. Diese Aufgabe wird durch eine optische Kopplungseinrichtung mit den in Patentanspruch 1 angegebenen Merkmalen gelöst.

Eine vorteilhafte Ausgestaltung der erfindungsgemäßen Kopplungseinrichtung ist dadurch gekennzeichnet, daß die Ferrule in eine Bohrung des längenveränderlichen Elements eingefügt ist.

Bei der eingangs genannten Kopplungseinrichtung ist der erste Halteblock am Chip befestigt und die Lichtwellenleiterfaser an dem längenveränderlichen Element gehalten. Dabei kann es zu Schwingungen oder Verbiegungen des längenveränderlichen Elements und damit zu einer temporären oder dauerhaften Dejustierung der Faser kommen.

Durch die erfindungsgemäße Anordnung wird die Längenveränderung des längenveränderlichen Elementes ermöglicht, jedoch die Bewegung des Elementes im Widerlager nur in der Dimension senkrecht zur Ausdehnungsrichtung des längenveränderlichen Elements beschränkt. Die Führung der beweglichen Achse ist dabei sehr genau, so daß eventuelle Bewegungen in Richtung der fixierten Achse kleiner als ein Mikrometer sind. Dadurch wird erreicht, daß die Bewegung des ersten Lichtwellenleiters (Faser) relativ zu dem zweiten Lichtwellenleiter (Chip) sehr exakt parallel zu der Oberfläche des Chips erfolgt, und daß eine Dejustage in anderen Dimensionen praktisch nicht auftritt.

Eine weitere vorteilhafte Ausgestaltung der erfindungsgemäßen Einrichtung ist dadurch gekennzeichnet, daß die Führungseinrichtung eine mit der längenveränderlichen Element verbundenen Ferrule aufweist, welche in einer Bohrung in dem zweiten Halteblock in Richtung der Achse des längenveränderlichen Elements, in der die Längenveränderung stattfindet, verschiebbar gelagert ist. Dabei ist vorteilhaft, wenn die Ferrule im zweiten Halteblock, die als Widerlage dient, in einer passenden, handelsüblichen Kupplungshülse geführt wird.

Die erfindungsgemäße Einrichtung ist dadurch gekennzeichnet, daß die Führungseinrichtung eine mit dem zweiten Halteblock verbundene Ferrule aufweist, welche in einer Bohrung in dem längenveränderlichen Element in Richtung der Achse des längenveränderlichen Elements, in der die Längenveränderung stattfindet, verschieblich gelagert ist. Dabei ist vorteilhaft, wenn die Ferrule über eine Hülse in dem längenveränderlichen Element geführt ist.

Insbesondere durch die Verwendung einer Ferrule, beispielsweise einer handelsüblichen Lichtwellenleiter-Steckerferrule, die in Längsrichtung des längenveränderlichen Elements angebracht wird, kann eine besonders genaue Führung erzielt werden.

Eine weitere vorteilhafte Ausgestaltung der erfindungsgemäßen Einrichtung ist dadurch gekennzeichnet, daß die Führungseinrichtung durch eine Nut-Feder-Verbindung zwischen dem längenveränderlichen Element und dem zweiten Halteblock gebildet ist. Damit wird eine mechanisch einfach umzusetzende Führungseinrichtung geschaffen, ohne auf zusätzliche Bauteile zurückgreifen zu müssen.

Eine weitere vorteilhafte Ausgestaltung der erfindungsgemäßen Einrichtung ist dadurch gekennzeichnet, daß der zweite Halteblock einen U-förmigen Querschnitt hat, und daß das längenveränderliche Element in dem U-förmigen Querschnitt des zweiten Halteblockes geführt ist. Hierbei ergeben sich auf beiden Seiten des längenveränderlichen Elements Führungsflächen, die für eine entsprechend exakte Führung sorgen. Dadurch wird eine optische Kopplungseinrichtung geschaffen, bei der die optische Verbindung zwischen einer Lichtwellenleiter-Faser und einem optischen Chip mit einer hohen Sicherheit und Stabilität bei kostengünstiger Montage erreicht wird.

Eine weitere vorteilhafte Ausgestaltung der erfindungsgemäßen Einrichtung ist dadurch gekennzeichnet, daß an dem längenveränderlichen Element ein Widerlager befestigt ist, welches an dem zweiten Lichtwellenleiter verschiebbar angreift, wobei in vorteilhafter Weise das Widerlager einerseits eine Feder zwischen einem Ende des Widerlagers und dem zweiten Lichtweilenleiter und andererseits eine Stellschraube zwischen einem anderen Ende des Widerlagers und dem zweiten Lichtwellenleiter aufweist. Das an dem längenveränderlichen Element angebrachte Widerlager kann an dem zweiten Lichtwellenleiter entlang gleiten. Durch die Schraube kann der Druck und die Lage senkrecht zur Oberfläche des zweiten Lichtwellenleiters eingestellt werden.

Ausführungsbeispiele der Erfindung werden im Folgenden anhand der Zeichnungen erläutert. Es zeigen:
- Fig. 1: den schematischen Aufbau der Verbindung zwischen dem längenveränderlichen Element und einer Lichtwellenleiter-Faser;
- Fig. 2: eine Seitenansicht der Einrichtung nach Fig. 1; und
- Fig. 3: ein Lichtwellenleiter-Faserfeld zur Ankopplung an optische Chips mit vielen parallelen Lichtwellenleitern.
- Fig.4A und 4B: eine Seitenansicht beziehungsweise eine Stirnansicht einer Kopplungseinrichtung gemäß einem Ausführungsbeispiel der Erfindung;
- Fig. 5A und 5B: eine Seitenansicht beziehungsweise eine Stirnansicht eines weiteren Ausführungsbeispiels der erfindungsgemäßen Kopplungseinrichtung;
- Fig. 6A und 6B: eine Seitenansicht beziehungsweise eine Stirnansicht eines weiteren Ausführungsbeispiels der erfindungsgemäßen Kopplungseinrichtung;
- Fig. 7A und 7B: eine Seitenansicht beziehungsweise eine Stirnansicht eines weiteren Ausführungsbeispiels der erfindungsgemäßen Kopplungseinrichtung.

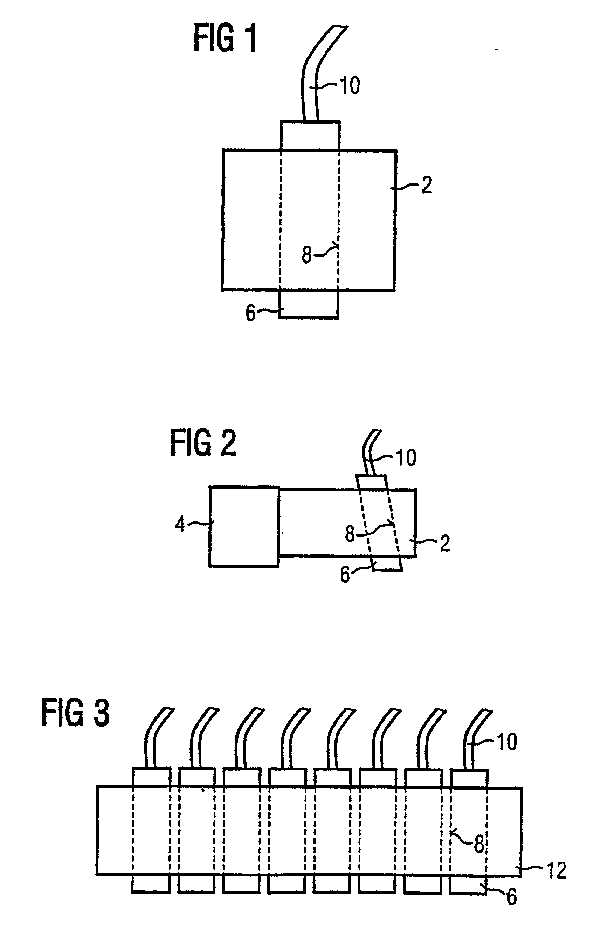

Ein rechteckiges, längliches, längenveränderliches und beispielsweise aus Aluminium bestehendes Element 2 ist in Fig. 1 in Stirnansicht und in Fig. 2 in Seitenansicht dargestellt. Das längenveränderliche Element 2 ist an einem an der Oberfläche eines optischen Chips (nicht gezeigt) angeklebten, beispielsweise aus Glas oder einer Glaskeramik gefertigten Halteblock 4 befestigt. Das Element 2 ist mit dem Halteblock 4 ebenfalls an einer Stirnseite verbunden.

Im Element 2 ist eine handelsübliche, in einer entsprechenden Bohrung 8 gehaltene Ferrule 6 befestigt. In der Ferrule 6 ist eine optische Faser 10 befestigt. Die Ferrule 8 kann entweder senkrecht in das Element 2 oder unter einem Winkel von beispielsweise 82° bis 83° in das Element eingebaut sein, um Reflexionen an der Stirnfläche der Fasern zu verringern. Die Ferrule kann auch eine Mehrfaser-Ferrule sein.

Fig. 3 zeigt eine Gruppe von Fasern in einem Block 12, wobei die Fasern 10 jeweils in einer Ferrule 6 angeordnet, die wiederum in entsprechenden Bohrungen 8 in den Block 12 eingepasst beziehungsweise eingeklebt sind.

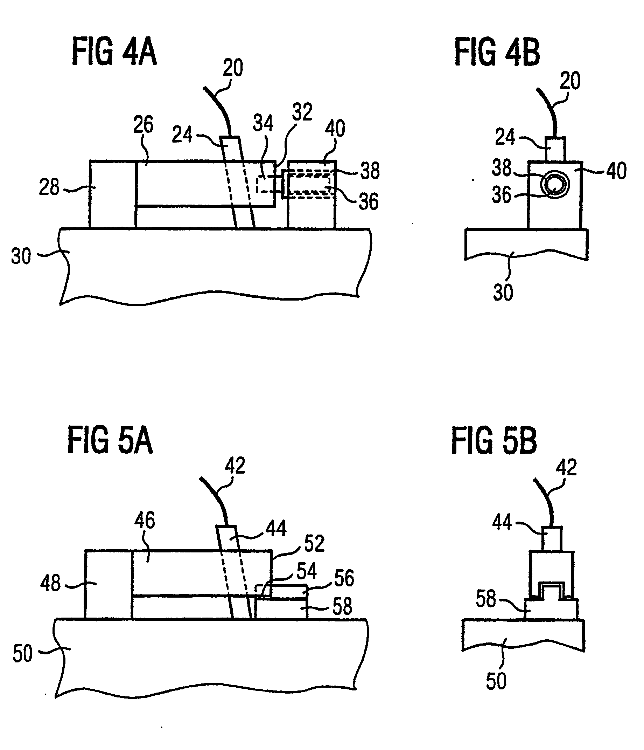

In Fig. 4A ist als erster Lichtwellenleiter eine Faser 20 dargestellt, die über eine Ferrule 24 in einem längenveränderlichen Element 26 befestigt ist. Das längenveränderliche Element 26 ist an einem Halteblock 28 befestigt beziehungsweise verklebt, der seinerseits an einem zweitem Lichtwellenleiter 30, in diesem Beispiel einem Lichtwellenleiter-Chip befestigt, insbesondere ebenfalls verklebt ist.

An der freien Stirnseite 32 des längenveränderlichen Elements 26 ist eine Ferrule 36 in einer entsprechenden Bohrung 34 angeordnet, wobei die Ferrule 36 über die freie Stirnfläche 32 des längenveränderlichen Elements 26 hinausragt. Das freie Ende der Ferrule 36 ist über eine Führungshülse 38 in einem zweiten Halteblock 40 gelagert, so daß sich das längenveränderliche Element 26 im wesentlichen nur in Richtung seiner Längsachse ausdehnen, sich in den dazu ortogonalen Richtungen hingegen nicht bewegen kann. Da es sich bei der Ferrule 36 und der Hülse 38 um bewährte Standardbauteile handelt, wird eine sichere Führung des längenveränderlichen Elements 26 in richtung seiner Längsachse gewährleistet. Alternativ kann die Ferrule 36 fest im Halteblock 40 angeordnet und gleitbar im längenveränderlichen Element 26 gelagert sein.

In Fig. 5A ist als erster Lichtwellenleiter eine Faser 42 dargestellt, die über eine Ferrule 44 in einem längenveränderlichen Element 46 befestigt ist. Das längenveränderliche Element 46 ist an einem Halteblock 48 befestigt beziehungsweise verklebt, der seinerseits an einem zweitem Lichtwellenleiter 50, in diesem Beispiel einem Lichtwellenleiter-Chip befestigt beziehungsweise verklebt ist.

In einer Stirnseite 52 des längenveränderlichen Elements 46 ist eine Nut 54 vorgesehen, die an einer entsprechenden Feder 56 an einem zweiten Halteblock 58 angreift und so eine Nut-Feder Verbindung zwischen dem längenveränderlichen Element 46 und dem zweiten Halteblock 58 bildet.

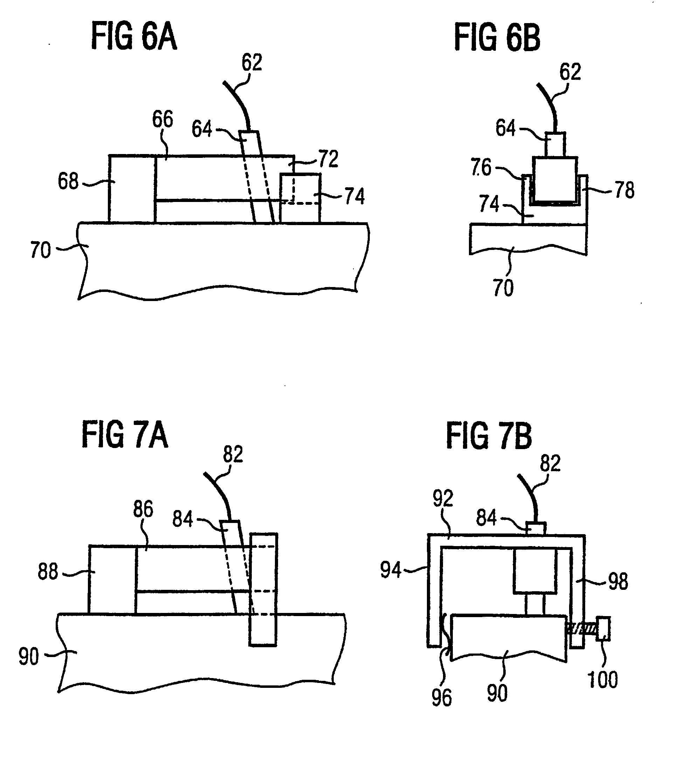

In Fig. 6A ist als erster Lichtwellenleiter eine Faser 62 dargestellt, die über eine Ferrule 64 in einem längenveränderlichen Element 66 befestigt ist. Das längenveränderliche Element 66 ist an einem Halteblock 68 befestigt beziehungsweise verklebt, der seinerseits an einem zweitem Lichtwellenleiter 70, in diesem Beispiel einem Lichtwellenleiter-Chip befestigt beziehungsweise verklebt ist.

An seinem freien Ende 72 ist das längenveränderliche Element 66 auf einem Halteblock 74 mit U-förmigen Querschnitt gelagert, wobei das längenveränderliche Element 66 in dem U-förmigen Querschnitt des Halteblocks 74 geführt ist. Der Halteblock 74 umgreift somit mit seinen zwei Schenkeln 76, 78 das vordere Ende 72 des längenveränderlichen Elementes 66, so daß dieses ebenfalls befriedigend geführt wird.

In Fig. 7A ist als erster Lichtwellenleiter eine Faser 82 dargestellt, die über eine Ferrule 84 in einem längenveränderlichen Element 86 befestigt ist. Das längenveränderliche Element 86 ist an einem Halteblock 88 befestigt beziehungsweise verklebt, der seinerseits an einem zweitem Lichtwellenleiter 90, in diesem Beispiel einem Lichtwellenleiter-Chip befestigt beziehungsweise verklebt ist.

An dem längenveränderlichen Element ist stirnseitig ein Widerlager 92 befestigt, welches an dem zweiten Lichtwellenleiter 90 verschiebbar angreift. Wie aus Fig. 7B zu ersehen ist, hat das Widerlager 92 einen U-förmigen Querschnitt und ist mit einem Schenkel 94 über eine Feder 96 an einer Seite des zweiten Lichtwellenleiters 90 und andererseits über eine an dem anderen Schenkel 98 des Widerlagers 92 angeordnete Stellschraube 100 auf dem zweiten Lichtwellenleiter abgestützt. Durch die Stellschraube 100 kann der Druck und damit die Lage des längenveränderlichen Elements 86 eingestellt werden.

## Patentansprüche

1. Optische Kopplungseinrichtung zum Überkoppeln von Licht aus einem ersten Lichtwellenleiter (20, 42, 62, 82) in einen zweiten Lichtwellenleiter (30, 50, 70, 90), mit einem langgestreckten, längenveränderlichen Element (26, 46, 66, 86), das sich mit seiner Längsrichtung parallel zu den Lichtwellenleiter-Endflächen erstreckt, einem ersten Halteelement (28, 48, 68, 88), das an einem Längsende des längenveränderlichen Elements (26, 46, 66, 86) angeordnet und dort an einer den zweiten Lichtwellenleiter (30, 50, 70, 90) enthaltenden Einheit befestigt ist und an dem das längenveränderliche Element (26, 46, 66, 86) stirnseitig abgestützt ist, einem zweiten Halteelement (40, 58, 74, 92), das am anderen Längsende des längenveränderlichen Elements (26, 46, 66, 86) angeordnet und dort an der den zweiten Lichtwellenleiter (30, 50, 70, 90) enthaltenden Einheit angeordnet ist und von dem das längenveränderliche Element (26, 46, 66, 86) an dessen anderem Ende gegen den zweiten Lichtwellenleiter (30, 50, 70, 90) hin abgestützt wird, wobei an dem zweiten Haltelement (40, 58, 74, 92) eine Linear-Führungseinrichtung vorgesehen ist, durch welche das längenveränderliche Element (26, 46, 66, 86) an dessen anderem Ende derart geführt ist, daß es sich im wesentlichen nur in Richtung seiner Längsachse längen kann, und einer Ferrule (24, 44, 64, 84), in welcher der erste Lichtwellenleiter (20, 42, 62, 82) gehalten ist und die an dem längenveränderlichen Element (26, 46, 66, 86) an einer Stelle zwischen den beiden Halteelementen (28, 48, 68, 88; 40, 58, 74, 92) gehalten ist, so daß die relative Lage der beiden Lichtwellenleiter-Endflächen zueinander mit Hilfe des längenveränderlichen Elements (26, 46, 66, 86) beeinflußbar ist.

2. Einrichtung nach Anspruch 1, **dadurch gekennzeichnet, daß** die Ferrule (24, 44, 64, 84) in eine Bohrung des längenveränderlichen Elements (26, 46, 66, 86) eingefügt ist.

3. Einrichtung nach Anspruch 1 oder 2, **dadurch gekennzeichnet, daß** die Führungseinrichtung eine mit dem längenveränderlichen Element (26) verbundene Ferrule (36) aufweist, welche in einer Bohrung des zweiten Halteelements (40) in Richtung der Achse des längenveränderlichen Elements (26), in der die Längenveränderung stattfindet, verschiebbar gelagert ist.

4. Einrichtung nach Anspruch 3, **dadurch gekennzeichnet, daß** die Ferrule über eine Hülse (38) im zweiten Halteelement (40) geführt ist.

5. Einrichtung nach Anspruch 1 oder 2, **dadurch gekennzeichnet, daß** die Führungseinrichtung eine mit dem zweiten Halteelement (40) verbundene Ferrule aufweist, welche in einer Bohrung in dem längenveränderlichen Element in Richtung der Achse des längenveränderlichen Elements, in der die Längenveränderung stattfindet, verschiebbar gelagert ist.

6. Einrichtung nach Anspruch 5, **dadurch gekennzeichnet, daß** die Ferrule über eine Hülse in dem längenveränderlichen Element geführt ist.

7. Einrichtung nach Anspruch 1 oder 2, **dadurch gekennzeichnet, daß** die Führungseinrichtung durch eine Nut-Feder-Verbindung zwischen dem längenveränderlichen Element und dem zweiten Halteelement (58) gebildet ist.

8. Einrichtung nach Anspruch 1 oder 2, **dadurch gekennzeichnet, daß** das zweite Halteelement (74) einen U-förmigen Querschnitt hat, und daß das längenveränderliche Element (56) in dem U-förmigen Querschnitt des zweiten Halteelements (74) geführt ist.

9. Einrichtung nach Anspruch 1 oder 2, **dadurch gekennzeichnet, daß** das längenveränderliche Element (86) an dem zweiten Halteelement fest angebracht ist und daß das zweite Halteelement an dem zweiten Lichtwellenleiter verschiebbar angreift.

10. Einrichtung nach Anspruch 9, **dadurch gekennzeichnet, daß** das zweite Halteelement einerseits eine Feder -(96) zwischen seinem Ende und dem zweiten Lichtwellenleiter (90) und andererseits eine Stellschraube (100) zwischen seinem anderen Ende und dem zweiten Lichtwellenleiter (90) aufweist.

## Claims

1. An optical coupling device for cross-coupling light from a first optical waveguide (20, 42, 62, 82) into a second optical waveguide (30, 50, 70, 90), having
• an elongate, variable-length element (26, 46, 66, 86) which extends with its longitudinal direction parallel to the optical waveguide end faces,
• a first holding element (28, 48, 68, 88) which is arranged at one longitudinal end of the variable-length element (26, 46, 66, 86) and fixed there to a unit containing the second optical waveguide (30, 50, 70, 90), and at which the variable-length element (26, 46, 66, 86) is supported on the front,
• a second holding element (40, 58, 74, 92) which is arranged at the other longitudinal end of the variable-length element (26, 46, 66, 86) and arranged there to the unit containing the second optical waveguide (30, 50, 70, 90), and which supports the variable-length element (26, 46, 66, 86) at its other end with respect to the second optical waveguide (30, 50, 70, 90), wherein a linear guide device being provided at the second holding element (40, 58, 74, 92), by means of which linear guide device the variable-length element (26, 46, 66, 86) is guided at its other end in such a way that it can lengthen substantially only in the direction of its longitudinal axis, and
• a ferrule (24, 44, 64, 84) in which the first optical waveguide (20, 42, 62, 82) is held and which is held at the variable-length element (26, 46, 66, 86) at a point between the two holding elements (28, 48, 68, 88; 40, 58, 74, 92) so that the relative position of the two optical waveguide end faces in relation to one another can be influenced with the aid of the variable-length element (26, 46, 66, 86).

2. The device according to claim 1, **characterized in that** the ferrule (24, 44, 64, 84) is inserted into a bore in the variable-length element (26, 46, 66, 86).

3. The device according to claim 1 or 2, **characterized in that** the guide device comprises a ferrule (36) which is connected to the variable-length element (26) and displaceable beared in a bore in the second holding element (40) in direction of the axis of the variable-length element (26) in which the variation in length takes place.

4. The device according to claim 3, **characterized in that** the ferrule is guided in the second holding element (40) via a sleeve (38).

5. The device according to claim 1 or 2, **characterized in that** the guide device comprises a ferrule which is connected to the second holding element (40) and displaceable beared in a bore in the variable-length element in direction of the axis of the variable-length element (26) in which the variation in length takes place.

6. The device according to claim 5, **characterized in that** the ferrule is guided in the variable-length element via a sleeve.

7. The device according to claim 1 or 2, **characterized in that** the guide device is formed by a groove-tongue connection between the variable-length element and the second holding element (58).

8. The device according to claim 1 or 2, **characterized in that** the second holding element (74) has a U-shaped cross section, and **in that** the variable-length element (56) is guided in the U-shaped cross section of the second holding element (74).

9. The device according to claim 1 or 2, **characterized in that** the variable-length element (86) is firmly connected to the second holding element, and **in that** the second holding element acts on the second optical waveguide in a displaceable manner.

10. The device according to claim 9, **characterized in that** the second holding element comprises, on the one hand, a spring (96) between its end and the second optical waveguide (90) and, on the other hand, a setting screw (100) between its other end and the second optical waveguide (90).

## Revendications

1. Dispositif optique de couplage pour le surcouplage de lumière d'un premier guide d'ondes (20, 42, 62, 82) dans un second guide d'ondes (30, 50, 70, 90), comprenant un élément allongé réglable en longueur (26, 46, 66, 86), qui s'étend dans sa direction longitudinale parallèlement aux faces terminales des guides d'ondes, un premier élément de maintien (28, 48, 68, 88), qui est aménagé sur une extrémité longitudinale de l'élément réglable en longueur (26, 46, 66, 86) et y est fixé sur une unité contenant le second guide d'ondes (30, 50, 70, 90) et sur lequel s'appuie côté frontal l'élément réglable en longueur (26, 46, 66, 86), un second élément de maintien (40, 58, 74, 92), qui est aménagé sur l'autre extrémité longitudinale de l'élément réglable en longueur (26, 46, 66, 86), y est aménagé sur l'unité contenant le second guide d'ondes (30, 50, 70, 90) et par lequel l'élément réglable en longueur (26, 46, 66, 86) est soutenu sur l'autre extrémité contre le second guide d'ondes (30, 50, 70, 90), en prévoyant sur le second élément de maintien (40, 58, 74, 92) un dispositif de guidage linéaire, par lequel l'élément réglable en longueur (26, 46, 66, 86) est guidé à son autre extrémité de sorte qu'il ne puisse s'allonger sensiblement que dans la direction de son axe longitudinal, et une virole (24, 44, 64, 84), dans laquelle le premier guide d'ondes (20, 42, 62, 82) est maintenu et qui est elle-même maintenue sur l'élément réglable en longueur (26, 46, 66, 86) à un endroit situé entre les deux éléments de maintien (28, 48, 68, 88; 40, 58, 74, 92) de sorte que la position relative des faces terminales des deux guides d'ondes puissent s'influencer l'une l'autre à l'aide de l'élément réglable en longueur (26, 46, 66, 86).

2. Dispositif selon la revendication 1, **caractérisé en ce que** la virole (24, 44, 64, 84) est emboîtée dans un orifice de l'élément réglable en longueur (26, 46, 66, 86).

3. Dispositif selon la revendication 1 ou 2, **caractérisé en ce que** le dispositif de guidage présente une virole (36) reliée à l'élément réglable en longueur (26), qui est montée de manière à pouvoir se déplacer dans un orifice du second élément de maintien (40) dans la direction de l'axe de l'élément réglable en longueur (26), dans lequel a lieu la modification de longueur.

4. Dispositif selon la revendication 3, **caractérisé en ce que** la virole est guidée dans le second élément de maintien (40) via une douille (38).

5. Dispositif selon la revendication 1 ou 2, **caractérisé en ce que** le dispositif de guidage présente une virole reliée au second élément de maintien (40), qui est montée de manière à pouvoir se déplacer dans un orifice de l'élément réglable en longueur dans la direction de l'axe de l'élément réglable en longueur, dans lequel a lieu la modification de longueur.

6. Dispositif selon la revendication 5, **caractérisé en ce que** la virole est guidée dans l'élément réglable en longueur via une douille.

7. Dispositif selon la revendication 1 ou 2, **caractérisé en ce que** le dispositif de guidage est formé par une liaison à languette et rainure entre l'élément réglable en longueur et le second élément de maintien (58).

8. Dispositif selon la revendication 1 ou 2, **caractérisé en ce que** le second élément de maintien (74) a une coupe transversale en forme de U et **en ce que** l'élément réglable en longueur (56) est guidé dans la coupe transversale en forme de U du second élément de maintien (74).

9. Dispositif selon la revendication 1 ou 2, **caractérisé en ce que** l'élément réglable en longueur (86) est monté fixe sur le second élément de maintien et **en ce que** le second élément de maintien s'engage de manière à pouvoir se déplacer par coulissement sur le second guide d'ondes.

10. Dispositif selon la revendication 9, **caractérisé en ce que** le second élément de maintien présente un ressort (96) entre son extrémité et le second guide d'ondes (90) et, d'autre part, une vis de réglage (100) entre son autre extrémité et le second guide d'ondes (90).
